## Europäisches Patentamt

## European Patent Office

## Office européen des brevets

(19)

(11) Veröffentlichungsnummer: **0 245 590**
**B1**

(12) **EUROPÄISCHE PATENTSCHRIFT**

(45) Veröffentlichungstag der Patentschrift:
**17.05.89**

(51) Int. Cl.⁴: **H02K 5/173, H02K 7/08**

(21) Anmeldenummer: **87102381.8**

(22) Anmeldetag: **19.02.87**

(54) **Mittenfreies Grosswälzlager mit integriertem elektrischem Direktantrieb.**

(30) Priorität: **10.05.86 DE 3615871**

(43) Veröffentlichungstag der Anmeldung:
**19.11.87 Patentblatt 87/47**

(45) Bekanntmachung des Hinweises auf die Patenterteilung:
**17.05.89 Patentblatt 89/20**

(84) Benannte Vertragsstaaten:
**AT BE CH DE ES FR GB GR IT LI LU NL SE**

(56) Entgegenhaltungen:
**DE-A- 3 213 172**
**GB-A- 1 422 191**
**US-A- 1 812 109**

(73) Patentinhaber: **Hoesch Aktiengesellschaft,
Eberhardstrasse 12, D-4600 Dortmund 1(DE)**

(72) Erfinder: **Bertram, Johannes, Dipl.-Ing., Zum Hach 16,
D-4750 Unna-Billmerich(DE)**

## Beschreibung

Die Erfindung betrifft ein mittenfreies Großwälzlager, bestehend aus zwei Lagerringen mit zwischen ihnen angeordneten Wälzlagerelementen und einem integrierten elektrischen Direktantrieb, bei dem die Wälzlagerelemente an einer Seite des Direktantriebes angeordnet sind.

Derartige Großwälzlager zum Verbinden von drehbaren mit feststehenden Konstruktionen werden eingesetzt, wenn eine hohe Anforderung an Lebensdauer und Wartungsfreiheit über eine lange Zeit bestehen, insbesondere dann, wenn Drehzahl und Drehmomentenbelastung ständig wechseln. Durch ihre Wartungsfreiheit ist diese kombinierte Lager- und Antriebseinheit trotz des höheren Fertigungs- und Steuerungsaufwandes herkömmlichen Einheiten mit Zahnradantrieb überlegen.

Die DE-OS 2 201 145 zeigt ein mittenfreies Großwälzlager mit integriertem Direktantrieb nach der Gattung der Erfindung. Dieses Großwälzlager ist nicht geeignet für den Einsatz in verwindungsweichen Anschlußkonstruktionen und für den Einsatz mit stark wechselnden Antriebskräften. Da es zur Erzielung eines guten Wirkungsgrades des Direktantriebes erforderlich ist, den Spalt zwichen Rotor und Stator so gering wie möglich zu halten, besteht die Gefahr, daß im genannten Einsatzfall Rotor und Stator sich unter extremen Bedingungen an der den Wälzlagerelementen gegenüberliegenden Seite des Direktantriebes berühren und beschädigen.

Der Erfindung liegt die Aufgabe zugrunde, sicherzustellen, daß eine Berührung von Rotor und Stator bei allen Betriebszuständen vermieden wird.

Diese Aufgabe wird erfindungsgemäß bei einem Großwälzlager der vorliegenden Gattung dadurch gelöst, daß sich die Lagerringe an der den Wälzlagerelementen gegenüberliegenden Seite des Direktantriebes übergreifen und einen Abstand aufweisen, der geringer ist als der Spalt zwischen Stator und Rotor des elektrischen Direktantriebes.

Durch die erfindungsgemäße Lösung wird nicht nur von der Funktion her ein langlebiges Lagerungs- und Antriebselement zum Einsatz für extreme Bedingungen geschaffen. Es wird auch sichergestellt, daß die Funktionsfähigkeit unter extremen Auslenkungen der Lagerung durch eine weiche Anschlußkonstruktion oder extreme Magnetkräfte erhalten bleibt.

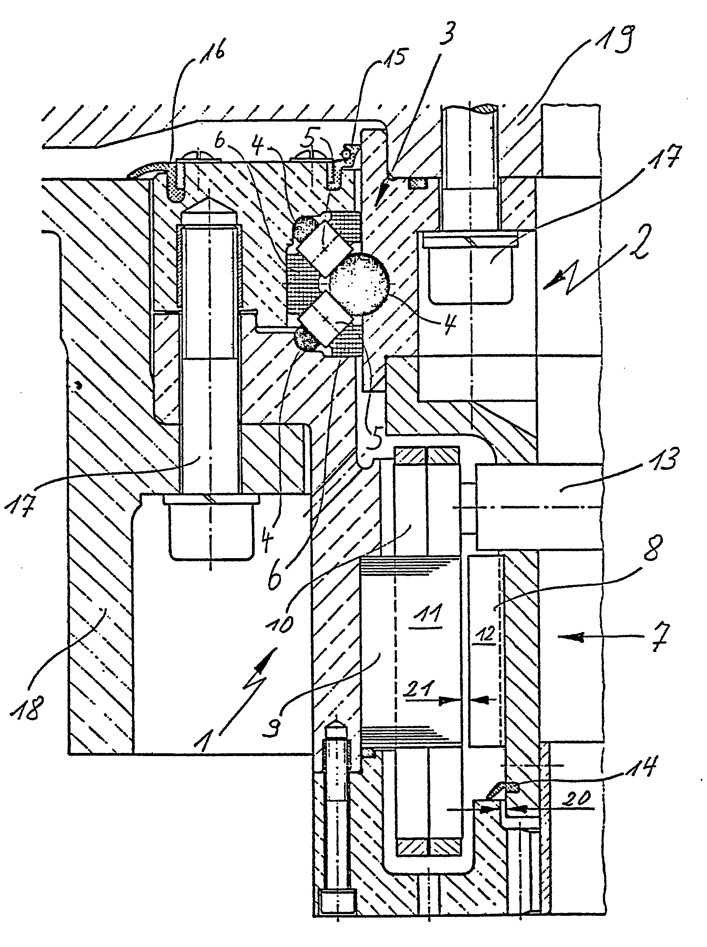

Ein Ausführungsbeispiel der Erfindung ist in der Zeichnung dargestellt und wird im folgenden näher beschrieben.

Das mittenfreie Großwälzlager hat einen äußeren Lagerring 1 und einen inneren Lagerring 2, zwischen denen als Wälzlagerelemente 3 die Laufdrähte 4, Rollen 5 und Käfige 6 angeordnet sind. Weiterhin tragen die Lagerringe 1, 2 den integrierten elektrischen Direktantrieb 7, wobei der Stator 8 in einem Lagerring und der Rotor 9 im anderen Lagerring integriert ist. Der Rotor 9 aus Spulenwicklungen 10 in Magnetblechen 11 ist dabei im äußeren Lagerring l integriert. Der Stator 8 besteht aus Permanentmagneten 12, die im inneren Lagerring 2 integriert sind. Eine Stromzuführung 13 versorgt den elektrischen Direktantrieb. Dichtungen 14, 15, 16 sorgen dafür, daß das Großwälzlager gegen Einflüsse von außen abgedichtet ist und keine Schmiermittel aus dem Lager nach außen dringen.

Befestigungsschrauben 17 dienen zur Verbindung des mittenfreien Großwälzlagers mit der unteren Anschlußkonstruktion 18 und der oberen Anschlußkonstruktion 19.

Zur Vermeidung einer Berührung von Stator 8 und Rotor 9 ist der Abstand 20 zwischen dem äußeren Lagerring 1 und dem inneren Lagerring 2 an der den Wälzlagerelementen 3 gegenüberliegenden Seite des Direktantriebes 7 kleiner als der Spalt 21 zwischen Stator 8 und Rotor 9.

1 Äußerer Lagerring
2 Innerer Lagerring
3 Wälzlagerelemente
4 Laufdraht
5 Rolle
6 Käfig
7 Elektrischer Direktantrieb
8 Stator
9 Rotor
10 Spulenwicklung
11 Magnetbleche
12 Permanentmagnete
I3 Stromzuführung
14 Dichtung
I5 Dichtung
16 Dichtung
17 Befestigungsschrauben
18 untere Anschlußkonstruktion
19 Obere Anschlußkonstruktion
20 Abstand
21 Spalt

## Patentansprüche

Mittenfreies Großwälzlager, bestehend aus zwei Lagerringen (1, 2) mit zwischen ihnen angeordneten Wälzlagerelementen (3) und einem integrierten elektrischen Direktantrieb (7) , bei dem die Wälzlagerelemente an einer Seite des Direktantriebes angeordnet sind, dadurch gekennzeichnet, daß sich die Lagerringe (1, 2) an der den Wälzlagerelementen (3) gegenüberliegenden Seite des Direktantriebes (7) übergreifen und einen Abstand (20) aufweisen, der geringer ist als der Spalt (21) zwischen Stator (8) und Rotor (9) des elektrischen Direktantriebes (7).

## Claims

Large centreless rolling contact bearing, comprising two bearing rings (1, 2) with rolling bearing elements (3) therebetween and an integral electrical direct drive (7), in which the rolling bearing elements are arranged on one side of the direct drive, characterised in that the bearing rings (1, 2) overlap each other on the side of the direct drive (7) lying opposite the rolling bearing elements and have a spacing (20) which is less than gap between the stator (8) and rotor (9) of the electrical direct drive (7).

**Revendications**

Couronne d'orientation comportant un espace libre au centre, formée de deux bagues de roulement (1, 2) entre lesquelles sont disposés des éléments de roulement (3), et un entraînement direct électrique intégré (7), dans laquelle les éléments de roulement sont disposés d'un côté de l'entraînement direct, caractérisé en ce que les bagues de roulement (1, 2) se chevauchent du côté de l'entraînement direct (7) opposé aux éléments de roulement (3), et présentent un écartement (20) plus petit que l'entrefer (21) entre le stator (8) et le rotor (9) de l'entraînement direct électrique (7).

EP 0 245 590 B1